# EUROPEAN PATENT SPECIFICATION

(11) **EP 2 645 108 B1**
(45) Date of publication and mention of the grant of the patent: **03.07.2019**
(21) Application number: 11842660.0
(22) Date of filing: 22.11.2011
(51) Int. Cl.: G01N 35/00

(54) **AUTOMATIC ANALYZER**
AUTOMATISCHES ANALYSEGERÄT
ANALYSEUR AUTOMATIQUE

(30) Priority: 26.11.2010 JP 2010263080
(43) Date of publication of application: 02.10.2013
(73) Proprietor: Hitachi High-Technologies Corporation, Tokyo 105-8717 (JP)
(72) Inventor: NISHIGAKI Kenichi, Hitachinaka-shi Ibaraki 312-8504 (JP); YOSHIDA Goro, Hitachinaka-shi Ibaraki 312-8504 (JP)
(74) Representative: Strehl Schübel-Hopf & Partner
(86) International application number: PCT/JP2011/076879
(87) International publication number: WO 2012/070557

(56) References cited:
- WO-A1-2010/021172
- JP-A- 4 190 161
- JP-A- 10 132 828
- JP-A- 11 002 631
- JP-A- 2003 121 449
- JP-A- 2005 181 123
- US-B1- 6 673 316

## Description

### Technical Field

The present invention relates to an automatic analyzer for clinical tests analyzing biological samples such as blood and urine. More particularly, the invention relates to an automatic analyzer equipped with an automatic startup function.

### Background Art

Automatic analyzers for clinical tests have been called on to reduce standby power consumption in order to lower the running cost of the tests and to protect the global environment in general. On the other hand, the automatic analyzers are also required to perform quick diagnoses in response to emergency test requests outside consultation hours for better medical service. To deal with emergency test requests typically at night requires keeping the analyzer in an active state, which does not contribute to reducing power consumption. Thus, the technique described in Patent Document 1 has been proposed as a method for putting the system in the active state before a patient sample arrives at the laboratory.

### Prior Art Document

### Patent Document

Patent Document 1: JP-2003-121449-A

Further, JP 4 190 161 A discloses an automatic analyser from which the pre-characterising part of clam 1 starts out.

### Summary of the Invention

### Problem to be Solved by the Invention

According to the technique described in Patent Document 1, the system can be remotely controlled to shorten its startup time by the amount of the time it takes the user to reach the location where the system is installed. However, since a system startup instruction is issued after a decision is made to test the sample, it still takes the usual time to start up the system following the test request and to reach a level of stability necessary for the analysis.

An object of the present invention is to provide an automatic analyzer capable of dealing with emergency test requests typically at night while reducing power consumption.

### Means for Solving the Problem

In order to achieve the object above, the present invention is configured as set forth in the appended claims.

There is provided an automatic analyzer having a reaction vessel for causing a sample to react with a reagent, and a measurement unit for measuring the reaction in the reaction vessel, the automatic analyzer including: power switches which turn on and off a power sources of at least two of components configuring the automatic analyzer, the components including a heat source for raising the temperature inside the analyzer and a cold source for lowering the temperature inside the analyzer; a selection means which selects any of a plurality of startup modes each corresponding to a temperature rise speed inside the analyzer following an analyzer startup; and a control mechanism which, in accordance with the startup mode selected by the selection means, controls the on/off operations of the power switch coupled to each of the components.

The above-mentioned measurement unit may perform, for example, colorimetric analysis (biochemical analysis) whereby the light coming from a light source and passing through a reaction liquid inside the reaction vessel is diffracted into a plurality of wavelengths so that the intensity of the light received at each of the wavelengths may be measured, and chemoluminescence or electrochemical luminescence measurement (immunoassay) involving a photo multiplier or the like measuring the intensity of the light emitted from markers in the reaction liquid. The measurement unit may also measure changes in a physical quantity other than light intensity as long as the measurement involves a reactant. Usually, such a measurement unit has its measured values often varied due to changes in ambient temperature. The present invention is particularly suitable for the measurement unit highly susceptible to the influence of changes in ambient temperature. Among the above-mentioned components, the heat source may be a heater (provided to heat the reaction liquid inside the reaction vessel up to a predetermined temperature), the light source of the measurement unit, a motor for operating a dispensing mechanism dispensing a predetermined amount of a sample or a reagent, or a motor for moving the dispensing mechanism to a predetermined position, for example. In addition to these heat sources, any object that emanates heat to its surroundings when operated in predetermined operation can be a heat source. The cold source may be a cooling mechanism for cooling to a predetermined temperature a reagent vessel that houses reagents so as to prevent deterioration of the reagents therein (although the cooling mechanism can become a heat source if it exchanges heat with the outside in order to cool the reagents, the cooling mechanism remains a cold source when it circulates cooling water that also cools its surroundings), or a cooling fan that lowers the temperature of electronic substrates in the analyzer to below a predetermined temperature, among others. These cooling mechanisms can be cold sources if they have the function of lowering the temperature outside the components.

The plurality of startup modes include an emergency sample measurement mode in which, when a sample urgently needs to be measured at night, the temperature inside the analyzer (especially the temperature of the measurement unit) is raised in the shortest possible time to a level high enough to make measurements stably with the analyzer just started up from its inactivate state, and an energy-saving mode in which a minimum amount of power is used to start up the analyzer. These modes may be set to be effective not only upon analyzer startup but also when the analyzer is stopped but some of its heat sources are kept active to preheat the inside of the analyzer so that the temperature inside the analyzer may later be raised at a higher speed. A variety of startup modes may also be set to address the user's requests. In addition to the startup modes preset by the analyzer manufacturer, a new startup mode may be created by the user utilizing a suitably provided function. In such a case, there may be provided beforehand storage of the thermal dose and cooling dose of each of the components regarded as a heat source or a cold source, and a user interface through which combinations of the stored thermal and cooling doses may be set selectively on a display screen.

### Effects of the Invention

The invention provides an automatic analyzer capable of dealing with emergency test requests typically at night while reducing power consumption.

### Brief Description of the Drawings

Fig. 1 shows an overall structure of an automatic analyzer for clinical tests.
Fig. 2 shows a structure of the control connections for various objects to be controlled in connection with the present invention. (Embodiment)
Fig. 3 shows a detailed structure of power control for an object to be controlled. (Embodiment)
Fig. 4 shows a detailed scheme of power control for objects to be controlled upon system startup.
Fig. 5 shows effects of power control according to the present invention.
Fig. 6 shows time transitions of control in various startup modes according to the present invention.

### Mode for Carrying Out the Invention

Some examples of the present invention are explained below in reference to the accompanying drawings.

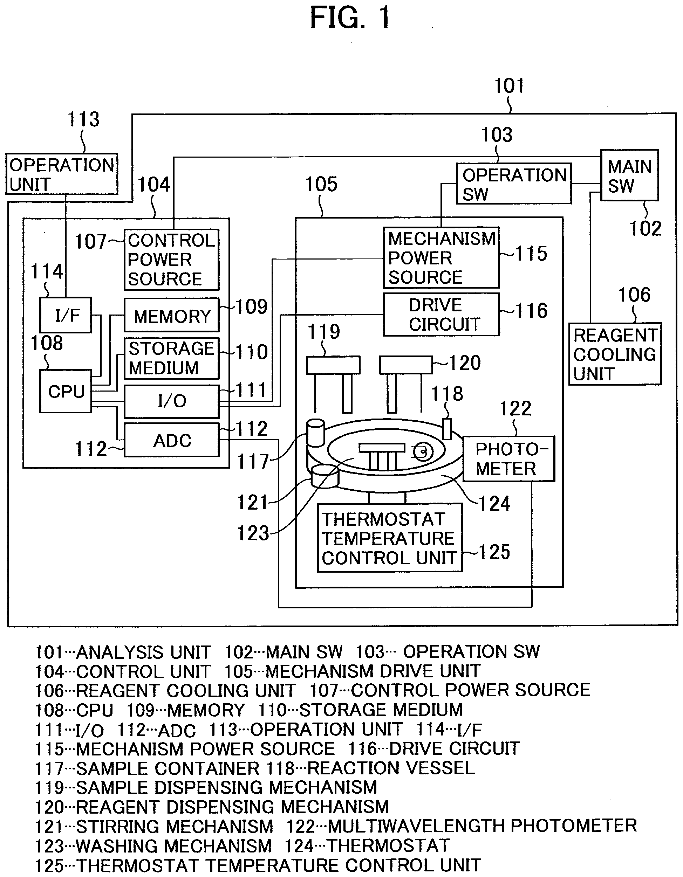

Fig. 1 is an overall block diagram of a biochemical automatic analyzer used in connection with the present invention. An analysis unit 101 is made up of a main SW 102 which is a main switch for receiving power, an operation SW 103 which is a switch for activating the analyzer upon use, a control unit 104, a mechanism drive unit 105, and a reagent cold storage unit 106 for constantly cooling reagents regardless of the state of the operation SW 103.

The control unit 104 is made up of a control power source 107, a CPU 108, a memory 109, a storage medium 110, an I/O unit 111 permitting input and output for controlling the mechanism drive unit 105, an ADC 112 for acquiring measured data through conversion of analog signals into digital form, and an I/F 114 which is an interface portion for communicating with an operation unit 113.

The mechanism drive unit 105 includes a mechanism power source 115, a drive circuit 116, a sample dispensing mechanism 119 for dispensing a sample from a sample container 117 into a reaction vessel 118, a reagent dispensing mechanism 120 for dispensing a reagent into the reaction vessel 118, a stirring mechanism 121 for stirring a liquid mixture in the reaction vessel, a multiwavelength photometer 122 for measuring the absorbance of the liquid mixture, a washing mechanism 123 for washing the reaction vessel after use, a thermostat 124 for keeping a reaction system at a constant temperature so as to stabilize reaction, and a thermostat temperature control unit 125 for controlling the temperature of the thermostat. In the analysis unit 101, the mechanism power source 115 and drive circuit 116 are controlled by signals from the I/O unit 111 of the control unit to drive the mechanisms involved. In the reaction vessel 118, the sample and reagent are mixed to form a liquid mixture. This liquid mixture is subjected to absorbance measurement at the wavelengths corresponding to various analysis items using the multiwavelength photometer 122 and ADC 112, whereby the sample is analyzed.

The reagent cold storage unit 106 keeps reagents at a low temperature for stable analysis operation, and serves as a cooling box for reagents while the analyzer is deactivated and is not operating for analysis. For this reason, the reagent cold storage unit 106 needs to be powered even when the control unit 104 and mechanism drive unit 105 are turned off.

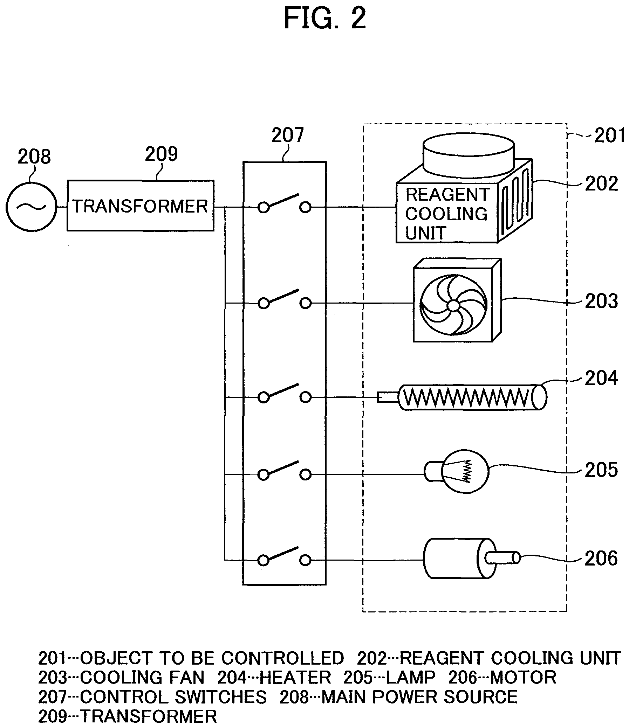

Fig. 2 shows connections of objects to be controlled 201 associated with heat generation in connection with this invention. The objects to be controlled 201 related to heat generation include a reagent cold storage unit 202, a cooling fan 203 for cooling the inside of the analyzer, a heater 204 for heating the thermostat, a lamp 205 acting as the light source of the photometer, and a motor 206 controlled by the drive circuit in the mechanism drive unit. These objects to be controlled are powered by a main power source 208 through an independent control switch 207 that can turn on and off the supply of power by way of a transformer 209.

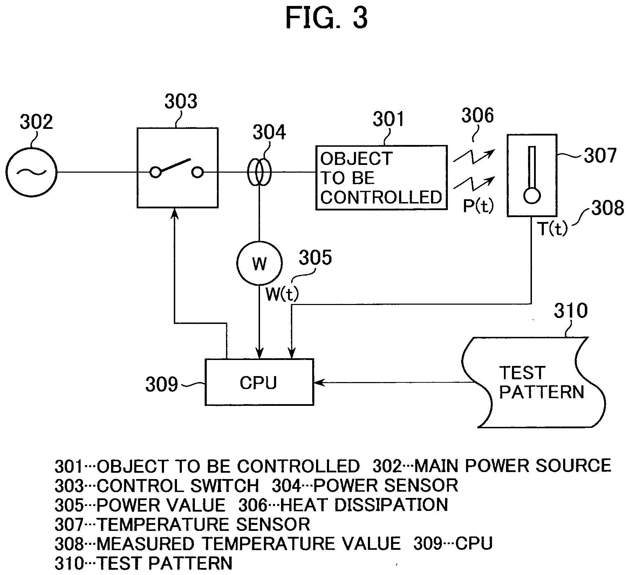

Fig. 3 illustrates a method for connecting and controlling an object to be controlled 301 in connection with the present invention. The power supplied from a main power source 302 and fed to the object to be controlled 301 via a control switch 303 is converted by a power sensor 304 into a power value 305. Heat dissipation 306 from the object to be controlled 301 is captured by a temperature sensor 307 and converted into a measured temperature value 308. Given input of the power value 305 and measured temperature value 308, a CPU 309 gives a command designating the next state of the control switch 303 based on internal control parameters. And as means for automatically preparing the control parameters, the CPU 309 has the function of inputting test patterns 310 that record the combinations of the control switch 303.

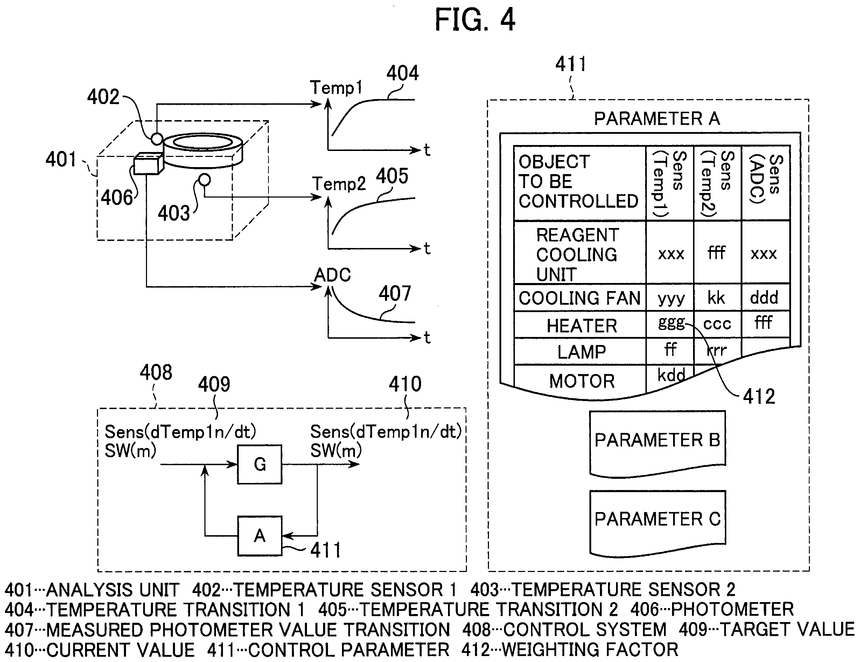

Fig. 4 shows a detailed scheme of power control upon system startup in connection with the present invention. An analysis unit 401 includes a temperature sensor 1 402 and a temperature sensor 2 403 disposed at positions associated with the stability of analysis. Thus positioned, these temperature sensors monitor a temperature transition 1 404 and a temperature transition 2 405. Also, the output value of a photometer 406 is monitored as a measured photometer value transition 407. The stability of the measured photometer value transition 407 is closely associated with the stability of the temperature transition 1 404 and temperature transition 2 405.

A control system 408 performs control in such a manner that, to get the temperature transition 1 404, temperature transition 2 405 and measured photometer value transition 407 converging on stabilized target values 409, current values 410 are brought closer to the target values 409 using a predetermined control parameter 411 relative to the current stability.

The control parameter 411 has its content determined by setting a weighting factor 412 on multiple dimensions so as to determine the degree of weight applied on the respective results of monitoring. This control parameter may have its settings varied depending on the user's preferences, or a plurality of parameters may be prepared beforehand so that the user can select any one of them as desired. This makes it possible to start up the analyzer in the usual startup time or to select a rapid startup or an energy-saving startup.

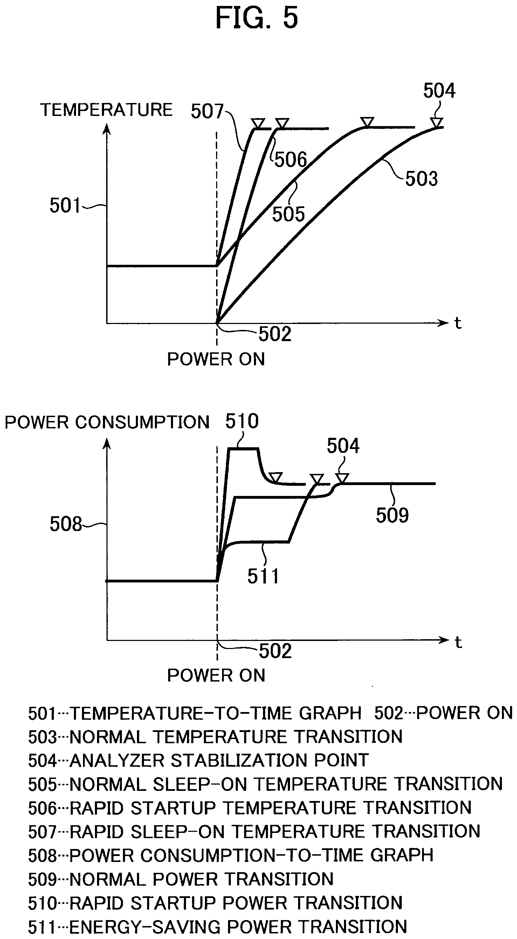

Fig. 5 shows effects of power control according to the present invention. A temperature-to-time graph 501 shows a temperature rise transition from a power-on point 502. A normal temperature transition 503 represents a temperature transition from the power-on point 502 on in accordance with conventional technique. At an analyzer stabilization point 504, the analyzer reaches a stable state in which the analyzer is ready for analysis. A normal sleep-on temperature transition 505 is a temperature transition in effect when solely particular components are kept on prior to the power-on point 502 typically for the purpose of raising the speed of starting up the analyzer. A rapid startup temperature transition 506 is a temperature transition in effect when the objects to be controlled associated with heat generation are controlled by the above-mentioned method so as to shorten the time required to reach the analyzer stabilization point 504. A rapid sleep-on temperature transition 507 is a temperature transition in effect when solely specific components are kept on prior to the power-on point 504 so as to further shorten the startup time.

A power consumption-to-time graph 508 shows a power consumption transition from the power-on point 502. A normal power transition 509 represents a power consumption transition from the power-on point 502 on in accordance with conventional technique. At the analyzer stabilization point 504 indicated, the analyzer reaches a stable state in which the analyzer is ready for analysis. A rapid startup power transition 510 is a power transition in effect when the objects to be controlled are controlled by the above-mentioned method so as to shorten the time required to reach the analyzer stabilization point 504. An energy-saving power transition 511 is a power transition in effect when a tradeoff is made between shortening the time required to reach the analyzer stabilization point 504 and reducing the power consumption upon analyzer startup.

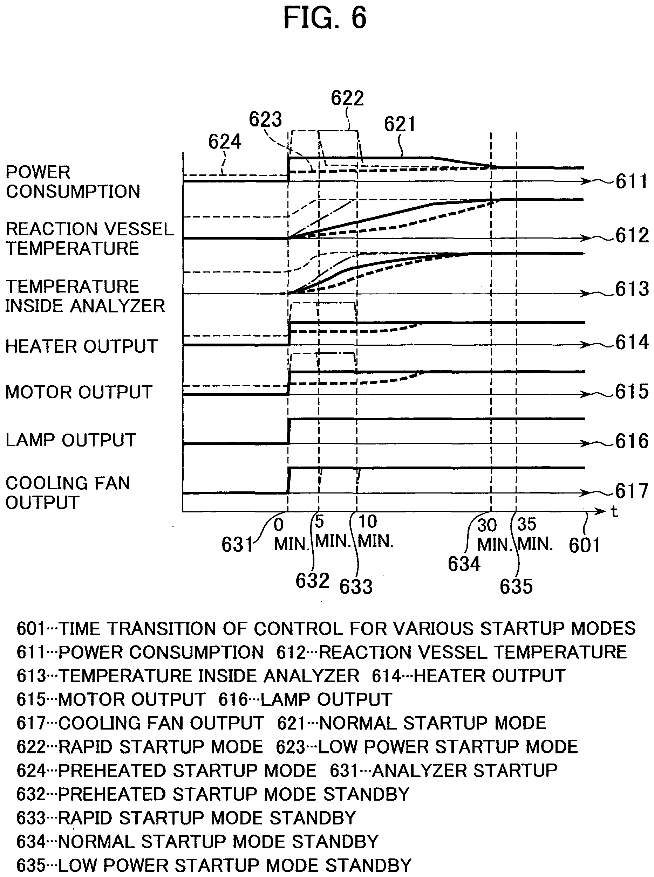

Fig. 6 shows temperature transitions indicative of the stability of object to be controlled in, and power consumption of, an analyzer as a second embodiment of the present invention. A control time transition 601 for various startup modes denotes, along a common time axis, power consumption 611, reaction vessel temperature 612, temperature 613 inside the analyzer, heater output 614, motor output 615, lamp output 616, and cooling fan output 617. The lines in the graph represent typical different startup modes that may be selected for the analyzer to which this invention is applied. The startup modes include normal startup mode 621, rapid startup mode 622, low power startup mode 623, and preheated startup mode 624. And marks along the time axis indicate the time of an analyzer startup 631, as well as the time of preheated startup mode standby 632, time of rapid startup mode standby 633, time of normal startup mode standby 634, and time of low power startup mode standby 635, the times being analysis start-ready times in the different modes.

Normal startup mode 621 indicates a time transition according to the ordinary startup method.

Rapid startup mode 622 is a mode that maximizes the heater output 614, motor output 615 and lamp output 616 as sources contributing to heating, while minimizing or deactivating the cooling fan output 617 contributing to cooling. This allows the reaction vessel temperature 612 and temperature 613 inside the analyzer to rise rapidly for a quicker transition to an analysis-ready state than usual, thereby shortening the waiting time of the user.

Also, power consumption is the largest when the analyzer is started up with a plurality of loads activated usually at the same time. Low power startup mode 623 is a mode that staggers over time the peaks of such loads as heater output, motor output, lamp output, and cooling fan output, thereby avoiding the concentration of power consumption upon startup. This makes it possible to reduce the capacity of a power supply system for the analyzer as well as the capacity of the power supply facility to be prepared by the user, which contributes to lowering initial introduction cost.

Also, preheated startup mode 614 is a mode in which the objects to be controlled are operated to a certain extent while the analyzer is inactive in order to keep the reaction vessel temperature 612 and temperature 613 inside the analyzer fairly high during inactivity for transition to an analysis-ready time (preheated startup mode standby 632) after the analyzer startup 631. This mode permits rapid transition from inactivity to the analysis-ready state and is also effective in handling an emergency request to have a sample analyzed during inactivity such as at night.

According to this invention, as described above, there is provided the function of individually turning on and off the power sources for the components acting as heat and cold sources in the automatic analyzer, as well as the function of storing basic data about the rise and fall of the temperature in the automatic analyzer due to the on/off operations of its components. In this configuration, if it is desired to start up the analyzer from its inactive state to quickly reach the analysis-ready state, the power sources of the components acting as heat sources may be turned on. Where necessary, the supply of energy to the heat sources may be raised to permit a faster transition to a measurement-ready temperature than in normal startup. In this case, such cold sources as the cooling fan and reagent cold storage unit may be kept off to raise the speed of temperature rise in the analyzer while lowering power consumption. Also, feedback control may be performed based on information from a thermometer (or a plurality of thermometers) installed inside the analyzer in such a manner as to control precisely the temperature in the analyzer.

Furthermore, if the analyzer is desired to be started up more quickly, the analyzer may be operated so that some of its components acting as heat sources are kept on even in a standby state in order to maintain the preheated condition.

That is, in a clinical-use automatic analyzer to be started up according to the present invention, the power sources of the loads associated with the temperature in the analyzer can be controlled with regard to each object to be controlled. This makes it possible to freely control the time required to attain a stable temperature unlike with conventional methods and thereby to shorten the time required for the temperature to stabilize. Because the power sources can be controlled per load, it is possible to fine-tune the combination of standby power settings and load power control upon startup in keeping with the user's request. The user is allowed not only to select the degree of energy saving but also to freely select the time it takes for the analyzer to be started up and stabilize.

### Description of Reference Numerals

- 101, 401: Analysis unit
- 102: Main SW
- 103: Operation SW
- 104: Control unit
- 105: Mechanism drive unit
- 106: Reagent cold storage unit
- 107: Control power source
- 108: CPU
- 109: Memory
- 110: Storage medium
- 111: I/O
- 112: ADC
- 113: Operation unit
- 114: I/F
- 115: Mechanism power source
- 116: Drive circuit
- 117: Sample container
- 118: Reaction vessel
- 119: Sample dispensing mechanism
- 120: Reagent dispensing mechanism
- 121: Stirring mechanism
- 122: Multiwavelength photometer
- 123: Washing mechanism
- 124: Thermostat
- 125: Thermostat temperature control unit
- 201, 301: Objects to be controlled
- 202: Reagent cold storage unit
- 203: Cooling fan
- 204: Heater
- 205: Lamp
- 206: Motor
- 207, 303: Control switch
- 208, 302: Main power source
- 209: Transformer
- 304: Power sensor
- 305: Power value
- 306: Heat dissipation
- 307: Temperature sensor
- 308: Measured Temperature value
- 309: CPU
- 310: Test pattern
- 402: Temperature sensor 1
- 403: Temperature sensor 2
- 404: Temperature transition 1
- 405: Temperature transition 2
- 406: Photometer
- 407: Measured photometer value transition
- 408: Control system
- 409: Target value
- 410: Current value
- 411: Control parameter
- 412: Weighting factor
- 501: Temperature-to-time graph
- 502: Power ON
- 503: Normal temperature transition
- 504: Analyzer stabilization point
- 505: Normal sleep-on temperature transition
- 506: Rapid startup temperature transition
- 507: Rapid sleep-on temperature transition
- 508: Power consumption-to-time graph
- 509: Normal power transition
- 510: Rapid startup power transition
- 511: Energy-saving power transition
- 601: Time transition of control for various startup modes
- 611: Power consumption
- 612: Reaction vessel temperature
- 613: Temperature inside analyzer
- 614: Heater output
- 615: Motor output
- 616: Lamp output
- 617: Cooling fan output
- 621: Normal startup mode
- 622: Rapid startup mode
- 623: Low power startup mode
- 624: Preheated startup mode
- 631: Analyzer startup
- 632: Preheated startup mode standby
- 633: Rapid startup mode standby
- 634: Normal startup mode standby
- 635: Low power startup mode standby

## Claims

1. An automatic analyzer having a reaction vessel (118) for causing a sample to react with a reagent, and a measurement unit (122) for measuring the reaction in the reaction vessel, the automatic analyzer comprising:
power switches (207, 303) which turn on and off a power source of at least two of components configuring the automatic analyzer, the components including a heat source (204, 205, 206) for raising the temperature inside the analyzer and a cold source (202, 203) for lowering the temperature inside the analyzer; and
a control mechanism (104, 309) which controls the on/off operations of the power switch coupled to each of the components,
**characterised by**:
selection means which allows a user to select any of a plurality of startup modes (621∼624) each corresponding to a temperature rise speed inside the analyzer following an analyzer startup and including an emergency sample measurement mode and an energy saving mode, wherein
the control mechanism (104, 309) is adapted to control the on/off operations of the power switch coupled to each of the components in accordance with the startup mode selected by the selection means.

2. The automatic analyzer according to claim 1, comprising
a function having a thermometer (402, 403) for measuring the temperature inside the analyzer and capable of variably controlling the control mechanism based on measured values of the thermometer.

3. The automatic analyzer according to claim 1, comprising
a storage mechanism (310, 411) which stores temperature change patterns occurring inside the analyzer when the power source of each of the components is turned on and off,
wherein the temperature change pattern inside the analyzer corresponding to the startup mode selected by the selection means is selected from the temperature change patterns stored in the storage mechanism, and
wherein the control mechanism controls the on/off operations of the power source of each of the components in a manner realizing the selected change pattern.

4. The automatic analyzer according to claim 1, comprising
a control mechanism (104, 309) which, in accordance with the startup mode selected by the selection means, performs control to keep some of the components in the power-on state while the analyzer is not started.

## Patentansprüche

1. Automatischer Analysator mit einem Reaktionsbehälter (118), um eine Probe mit einem Reagenz reagieren zu lassen, und einer Messeinheit (122) zum Messen der Reaktion in dem Reaktionsbehälter, wobei der automatische Analysator Folgendes umfasst:
Leistungsschalter (207, 303), die eine Energiequelle von mindestens zwei den automatischen Analysator aufbauenden Komponenten ein- und ausschalten, wobei die Komponenten eine Wärmequelle (204, 205, 206) zum Anheben der Temperatur innerhalb des Analysators und eine Kältequelle (202, 203) zum Senken der Temperatur innerhalb des Analysators umfassen; und
einen Steuermechanismus (104, 305), der den Einschalt-/Ausschaltvorgang des mit einer jeweiligen Komponente gekoppelten Leistungsschalters steuert,
**gekennzeichnet durch**:
eine Wähleinrichtung, die es einem Benutzer ermöglicht, einen von mehreren Hochlaufmodi (621-624) zu wählen, die jeweils einer Temperaturanstiegsgeschwindigkeit innerhalb des Analysators nach einem Hochlaufen des Analysators entsprechen und einen Notfallproben-Messmodus und einen Energiesparmodus umfassen, wobei
der Steuermechanismus (104, 309) eingerichtet ist, die Einschalt-/Ausschaltvorgänge des mit einer jeweiligen Komponente gekoppelten Leistungsschalters entsprechend dem mittels der Wähleinrichtung gewählten Hochlaufmodus zu steuern.

2. Automatischer Analysator nach Anspruch 1, umfassend:
eine Funktion mit einem Thermometer (402, 403) zum Messen der Temperatur innerhalb des Analysators und mit der Fähigkeit zur variablen Steuerung des Steuermechanismus auf Grund des gemessenen Werts des Thermometers.

3. Automatischer Analysator nach Anspruch 1, umfassend:
einen Speichermechanismus (310, 411), der Temperaturänderungsmuster speichert, die innerhalb des Analysators auftreten, wenn die Energiequelle der jeweiligen Komponenten ein- und ausgeschaltet wird,
wobei aus den im Speichermechanismus gespeicherten Temperaturänderungsmustern dasjenige Temperaturänderungsmuster innerhalb des Analysators gewählt wird, das dem von der Wähleinrichtung gewählten Hochlaufmodus entspricht, und
wobei der Steuermechanismus die Einschalt-/Ausschaltvorgänge der Energiequelle der jeweiligen Komponenten in einer Weise steuert, die das ausgewählte Änderungsmuster verwirklicht.

4. Automatischer Analysator nach Anspruch 1, umfassend:
einen Steuermechanismus (104, 309), der entsprechend dem von der Wähleinrichtung gewählten Hochlaufmodus eine Steuerung ausführt, um einige der Komponenten im eingeschalteten Zustand zu halten, während der Analysator nicht gestartet ist.

## Revendications

1. Analyseur automatique ayant un récipient de réaction (118) pour faire en sorte qu'un échantillon réagisse avec un réactif, et une unité de mesure (122) pour mesurer la réaction dans le récipient de réaction, l'analyseur automatique comprenant :
des commutateurs d'alimentation électrique (207, 303) qui activent et désactivent une source d'énergie électrique d'au moins deux de composants configurant l'analyseur automatique, les composants incluant une source de chaleur (204, 205, 206) pour élever la température à l'intérieur de l'analyseur et une source de froid (202, 203) pour abaisser la température à l'intérieur de l'analyseur ; et
un mécanisme de commande (104, 309) qui commande les opérations marche/arrêt du commutateur d'alimentation électrique couplé à chacun des composants,
**caractérisé par** :
un moyen de sélection qui permet à un utilisateur de sélectionner l'un quelconque d'une pluralité de modes de démarrage (621-624) correspondant chacun à une vitesse d'élévation de température à l'intérieur de l'analyseur suite à un démarrage d'analyseur et incluant un mode de mesure d'échantillon d'urgence et un mode d'économie d'énergie, dans lequel
le mécanisme de commande (104, 309) est adapté à commander les opérations marche/arrêt du commutateur d'alimentation électrique couplé à chacun des composants conformément au mode de démarrage sélectionné par le moyen de sélection.

2. Analyseur automatique selon la revendication 1, comprenant
une fonction ayant un thermomètre (402, 403) pour mesurer la température à l'intérieur de l'analyseur et apte à commander de manière variable le mécanisme de commande sur la base de valeurs mesurées du thermomètre.

3. Analyseur automatique selon la revendication 1, comprenant
un mécanisme de stockage (310, 411) qui stocke des profils de changement de température survenant à l'intérieur de l'analyseur lorsque la source d'énergie électrique de chacun des composants est activée et désactivée,
dans lequel le profil de changement de température à l'intérieur de l'analyseur correspondant au mode de démarrage sélectionné par le moyen de sélection est sélectionné à partir des profils de changement de température stockés dans le mécanisme de stockage, et
dans lequel le mécanisme de commande commande les opérations marche/arrêt de la source d'énergie électrique de chacun des composants d'une manière réalisant le profil de changement sélectionné.

4. Analyseur automatique selon la revendication 1, comprenant
un mécanisme de commande (104, 309) qui, conformément au mode de démarrage sélectionné par le moyen de sélection, exécute une commande pour maintenir certains des composants dans l'état d'énergie activée alors que l'analyseur n'est pas démarré.
